# EUROPÄISCHE PATENTSCHRIFT

(11) **EP 0 885 680 B1**
(45) Veröffentlichungstag und Bekanntmachung des Hinweises auf die Patenterteilung: **21.07.2004**
(21) Anmeldenummer: 98103330.1
(22) Anmeldetag: 26.02.1998
(51) Int. Cl.: B23G 3/00, B23G 1/46

(54) **Gewindeschneidapparat**
Screw thread cutting device
Dispositif de taraudage

(30) Priorität: 28.05.1997 DE 19722257
(43) Veröffentlichungstag der Anmeldung: 23.12.1998
(73) Patentinhaber: EMUGE-Werk Richard Glimpel GmbH & Co.KG Fabrik für Präzisionswerkzeuge, 91207 Lauf (DE)
(72) Erfinder: Watzke, Rüdiger, 91233 Speikern/Neunkirchen am Sand (DE)
(74) Vertreter: Matschkur, Lindner Blaumeier Patent- und Rechtsanwälte

(56) Entgegenhaltungen:
- DE-A- 3 248 080
- FR-A- 826 008
- US-A- 2 325 184
- US-A- 2 613 786
- US-A- 4 579 484
- US-A- 5 096 343
- US-A- 5 263 799

## Beschreibung

Die Erfindung bezieht sich auf einen Gewindeschneidapparat, insbesondere Reversierfutter, mit einer ausziehbareren Spindel und Druckausgleichsleitungen, wie z.B. aus der US-A-2 325 184 bekannt.

Beim Auseinanderziehen der Spindel derartiger Gewindeschneidapparate entsteht ein Unterdruck, durch den bei der üblichen Ausbildung der Druckausgleichsleitungen als durchgehende Entlüftungsöffnungen Emulsion und Bearbeitungsrückstände nach innen gesaugt werden können. Darüber hinaus kann durch einen derartigen Unterdruck auch Getriebeöl an unerwünschte Stellen des Gewindeschneidapparas gelangen.

Will man dies vermeiden und dichtet die Druckausgleichsleitungen nach außen ab, so kann bei Erwärmung Überdruck entstehen, der über die Kolbenflächen die Null-Position der ausziehbaren Spindel unkontrolliert, bis ggf. sogar in die Leerlauf- oder gar Reversierstellung, verschiebt. Darüber hinaus werden auch die Schaltkräfte durch Über- oder Unterdruck verfälscht.

Der Erfindung liegt daher die Aufgabe zugrunde, einen Gewindeschneidapparat der eingangs genannten Art so auszugestalten, daß ein einfacher Druckausgleich beim Ausziehen der Spindel möglich ist, ohne daß von außen Emulsion oder Schmutz eindringen kann.

Zur Lösung dieser Aufgabe ist erfindungsgemäß vorgesehen, daß die Druckausgleichsleitungen in eine durch eine bewegliche Wand gegenüber der Außenluft abgedichtete Ausgleichskammer einmünden.

Eine solche bewegliche Wand kann beispielsweise von einem in einer zylindrischen Ausgleichskammer zwischen Anschlägen frei verschiebbaren Kolben gebildet sein.

Alternativ dazu und letztendlich noch einfacher in der Realisierung gestaltet sich die erfindungsgemäße Lösung, wenn die bewegliche Wand durch eine Rollmembran gebildet wird, die die Ausgleichskammer überdeckt.

Unabhängig davon, ob der Kolben oder die Rollmembran direkt an der Gehäuseaußenseite liegen oder über Entlüftungsöffnungen eines anschließenden Bauteils mit der Außenatmosphäre in Verbindung stehen, ergibt sich durch die erfindungsgemäße Ausgestaltung in einfachster Weise der gewünschte Druckausgleich ohne die geringste Gefahr einer Verschmutzung oder einer Verfälschung der Schaltfunktionen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

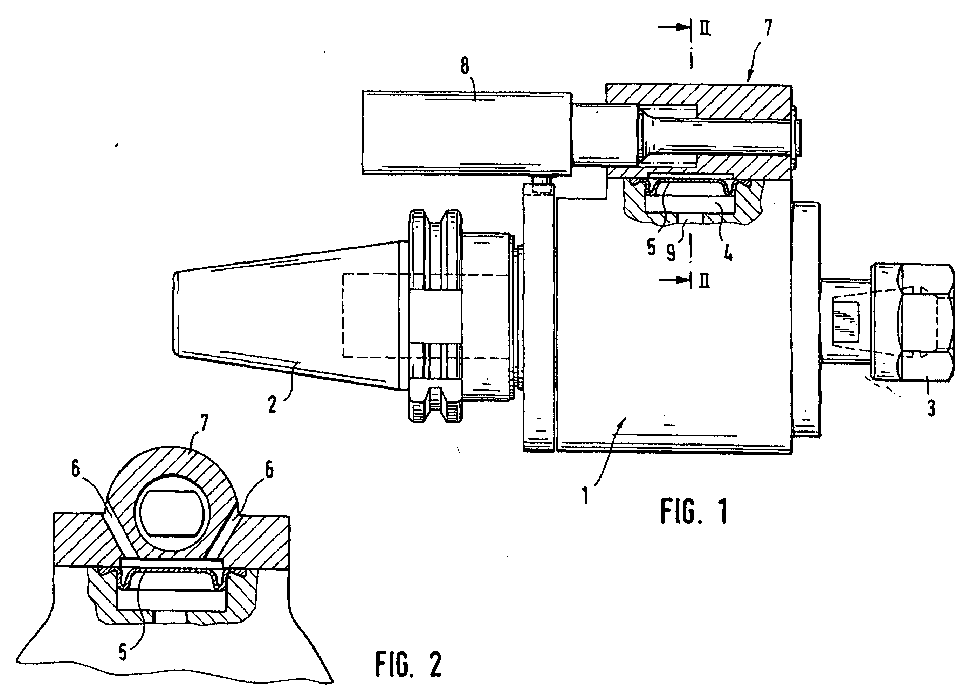

- Fig. 1: eine teilweise geschnittene Seitenansicht eines erfindungsgemäßen Gewindeschneidapparats, und
- Fig. 2: einen Schnitt längs der Linie II-II in Fig. 1.

Im dargestellten Ausführungsbeispiel bezeichnet 1 einen Gewindeschneidapparat, insbesondere ein Reversierfutter mit einer ausziehbaren Spindel, die mit dem Schaft 2 zur Aufnahme in die Werkzeugmaschine in getrieblicher Verbindung steht. An der ausziehbaren Spindel ist vorne der Spannkopf 3 für den nicht gezeigten Gewindebohrer befestigt.

Die verschiedenen Kammern und Bohrungen im Inneren des abgedichteten Gewindeschneidapparats 1 münden über eine Druckausgleichsleitung 9 in eine Ausgleichskammer 4 ein, die im dargestellten Ausführungsbeispiel durch eine Rollmembran 5 verschlossen ist, die ihrerseits wiederum durch Entlüftungsöffnungen 6 in dem sie überdeckenden Stopparm 7 mit der Außenluft verbunden ist. Mit 8 ist der Fixierbolzen in der Werkzeugmaschine bezeichnet.

Ob nun im Inneren des abgedichteten Gewindeschneidapparats 1 ein Unterdruck durch das Ausziehen der Spindel oder ein Überdruck durch thermische Erhitzung auftritt, stets ist über die bewegliche Rollmembran 5 und die Entlüftungsbohrungen 6 zur Außenatmosphäre ein vollständiger Druckausgleich möglich, ohne daß Verunreinigungen von außen in den Gewindeschneidapparat gelangen können, die mit der Zeit sogar dessen Funktion lahmlegen könnten.

Die Erfindung ist nicht auf das dargestellte Ausführungsbeispiel beschränkt. Wie bereits weiter oben beschrieben, könnte anstelle der Rollmembran auch ein begrenzt zwischen Anschlägen in der Ausgleichskammer 4, die zu diesem Zweck dann zweckmäßigerweise rotationszylindrisch ausgebildet sein sollte, verschiebbarer Kolben vorgesehen werden.

## Patentansprüche

1. Gewindeschneidapparat, insbesondere Reversierfutter, mit einer ausziehbaren Spindel und Druckausgleichsleitungen, **dadurch gekennzeichnet, daß** die Druckausgleichsleitungen (9) in eine durch eine bewegliche Wand gegenüber der Außenluft abgedichtete Ausgleichskammer (4) einmünden.

2. Gewindeschneidapparat nach Anspruch 1, **dadurch gekennzeichnet, daß** die bewegliche Wand von einem in einer zylindrischen Ausgleichskammer (4) zwischen Anschlägen frei verschiebbaren Kolben gebildet ist.

3. Gewindeschneidapparat nach Anspruch 1, **dadurch gekennzeichnet, daß** die bewegliche Wand eine Rollmembran (5) ist.

## Claims

1. Tapping device, in particular reversing chuck, having an extensible spindle and pressure compensation lines, **characterised in that** the pressure compensation lines (9) open into an compensation chamber (4) sealed with respect to the external air by a movable wall.

2. Tapping device according to claim 1, **characterised in that** the movable wall is formed by a piston which is freely displaceable between stops in a cylindrical compensation chamber (4).

3. Tapping device according to claim 1, **characterised in that** the movable wall is a rolling membrane (5).

## Revendications

1. Dispositif de taraudage, en particulier à axe réversible, du type comportant une broche extractible et des conduits d'égalisation de pression, **caractérisé en ce que** les conduits d'égalisation de pression (9) débouchent dans une chambre d'égalisation rendue hermétique vis-à-vis de l'air extérieur par une cloison mobile.

2. Dispositif de taraudage selon la revendication 1, **caractérisé en ce que** la cloison mobile est constituée par un piston pouvant se déplacer librement entre deux butées dans une chambre d'égalisation cylindrique.

3. Dispositif de taraudage selon la revendication 1, **caractérisé en ce que** la cloison mobile est une membrane ondulée (5).
